# EUROPEAN PATENT APPLICATION

(11) **EP 4 525 532 A1**
(43) Date of publication of application: **19.03.2025**
(21) Application number: 22941164.0
(22) Date of filing: 12.05.2022
(51) Int. Cl.: H04W 64/00

(54) **POSITIONING CONFIGURATION INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Gunzelmann, Rainer
(86) International application number: PCT/CN2022/092568
(87) International publication number: WO 2023/216208

(57) **Abstract**

Embodiments of the present disclosure provides a positioning configuration information processing method and apparatus, a communication device, and a storage medium. The positioning configuration information processing method is executed by a gNB-DU, and comprises: sending SRS configuration-related information to a gNB-CU, so that the gNB-CU sends the SRS configuration-related information to a UE, wherein the SRS configuration-related information is used for positioning the UE.

## Description

### TECHNICAL FIELD

The present disclosure relates to, but not limited to, the field of wireless communication technology, in particular to a positioning configuration information processing method, an apparatus, a communication device, and a storage medium.

### BACKGROUND

Currently, in a 5^{th}-Generation (5G) communication system, positioning information is sent to a User Equipment (UE) via a 5G Radio Access Network (NG-RAN). However, under Central Unit (CU)-Distributed Unit (DU) architecture of a 5G base station, usually a base station CU (gNB-CU) obtains the positioning information from a base station DU (gNB-DU) by a UE context modification procedure after the interaction of the position information. As a result, a positioning delay is increased, and an additional signaling load is generated.

### SUMMARY

The present disclosure provides in some embodiments a positioning configuration information processing method, an apparatus, a communication device, and a storage medium.

In a first aspect, the present disclosure provides in some embodiments a positioning configuration information processing method, performed by a gNB-DU, including: sending Sounding Reference Signal (SRS) configuration-related information to a gNB-CU. The SRS configuration-related information is to be sent to a UE by the gNB CU, and the SRS configuration-related information is used for positioning the UE.

In a second aspect, the present disclosure provides in some embodiments a positioning configuration information processing method, performed by a gNB-CU, including: receiving SRS configuration-related information sent by a gNB-DU; and sending the SRS configuration-related information to a UE. The SRS configuration-related information is used for positioning the UE.

In a third aspect, the present disclosure provides in some embodiments a positioning configuration information processing method, performed by a UE, including: receiving SRS configuration-related information sent by a gNB-CU, the SRS configuration-related information being obtained by the gNB-CU from a gNB-DU; and determining a position of the UE based on the SRS configuration-related information.

In a fourth aspect, the present disclosure provides in some embodiments a positioning configuration information processing apparatus, applied to a gNB-DU, including: a first sending module configured to send SRS configuration-related information to a gNB-CU. The SRS configuration-related information is to be sent to a UE by the gNB CU, and the SRS configuration-related information is used for positioning the UE.

In a fifth aspect, the present disclosure provides in some embodiments a positioning configuration information processing apparatus, applied to a gNB-CU, including: a second reception module configured to receive SRS configuration-related information sent by a gNB-DU; and a second sending module configured to send the SRS configuration-related information to a UE, the SRS configuration-related information being used for positioning the UE.

In a sixth aspect, the present disclosure provides in some embodiments a positioning configuration information processing apparatus, applied to a UE, including: a third reception module configured to receive SRS configuration-related information sent by a gNB-CU, the SRS configuration-related information being obtained by the gNB-CU from a gNB-DU; and a second processing module configured to determine a position of the UE based on the SRS configuration-related information.

In a seventh aspect, the present disclosure provides in some embodiments a communication device, including: a processor; and a memory storing therein instructions executable by the processor. The processor is configured to execute the executable instructions, so as to implement the above-mentioned positioning configuration information processing methods.

In an eighth aspect, the present disclosure provides in some embodiments a computer storage medium storing therein a computer-executable program. The computer-executable program is executed by a processor so as to implement the above-mentioned positioning configuration information processing methods.

The technical solutions provided in the embodiments of the present disclosure have the following beneficial effects.

In the embodiments of the present disclosure, the gNB-DU sends the SRS configuration-related information to the gNB-CU, and then the gNB-CU sends the SRS configuration-related information to the UE. The SRS configuration-related information is used for positioning the UE. In this way, it is able to ensure that the SRS configuration-related information is sent by the gNB-CU to the UE, thereby to position the UE based on the SRS configuration-related information. As compared with an operation in which the gNB-CU obtains positioning-related information from the gNB-DU based on a UE context modification procedure and then sends it to the UE after the interaction of positioning information, in the embodiments of the present disclosure, the gNB-CU merely needs to directly send the SRS configuration-related information determined by the gNB-DU to the UE, so as to position the UE, thereby to reduce a positioning delay, reduce signaling interaction, and reduce power consumption of the communication device (e.g., the gNB-DU, the gNB-CU and/or the UE). In addition, it is able to further reduce an additional signaling overhead.

It should be appreciated that, the above-mentioned general description and the following detailed description are for illustrative and explanatory purposes, but shall not be used to limit the embodiments of the present disclosure.

### BRIEF DESCRIPTION OF THE DRAWINGS

FIG. 1 is a schematic view showing a wireless communication system according to an embodiment of the present disclosure;
FIG. 2 is a schematic view showing a positioning procedure according to an embodiment of the present disclosure;
FIG. 3 is a flow chart of a positioning configuration information processing method according to an embodiment of the present disclosure;
FIG. 4 is a flow chart of a positioning configuration information processing method according to an embodiment of the present disclosure;
FIG. 5 is a flow chart of a positioning configuration information processing method according to an embodiment of the present disclosure;
FIG. 6 is a flow chart of a positioning configuration information processing method according to an embodiment of the present disclosure;
FIG. 7 is a flow chart of a positioning configuration information processing method according to an embodiment of the present disclosure;
FIG. 8 is a flow chart of a positioning configuration information processing method according to an embodiment of the present disclosure;
FIG. 9 is a block diagram of a positioning configuration information processing apparatus according to an embodiment of the present disclosure;
FIG. 10 is a block diagram of a positioning configuration information processing apparatus according to an embodiment of the present disclosure;
FIG. 11 is a block diagram of a positioning configuration information processing apparatus according to an embodiment of the present disclosure;
FIG. 12 is a block diagram of a UE according to an embodiment of the present disclosure; and
FIG. 13 is a block diagram of a base station according to an embodiment of the present disclosure.

### DETAILED DESCRIPTION

The present disclosure will be described hereinafter in details in conjunction with illustrative embodiments, and examples thereof are shown in the drawings. Unless otherwise specified, identical numerals in different drawings represent identical or similar elements. The implementations in the following description do not include all implementations consistent with the embodiments of the present disclosure, and in contrast, they are merely examples of devices and methods consistent with some aspects of the embodiments of the present disclosure.

The terms used in embodiments of the present disclosure are for illustrative purposes only, but do not intend to limit the present disclosure. Such a singular form as "one" or "the" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of the same type from each other. For example, without departing from the scope of the present disclosure, first information may also be called as second information, and similarly second information may also be called as first information. Depending on the context, such a word as "if" may be construed as "when ...", "in the case that ... " or "in response to determining that ... ".

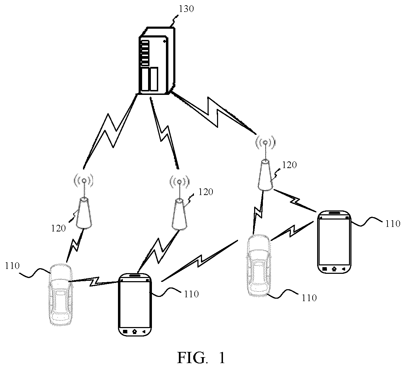

FIG. 1 is a schematic view showing a wireless communication system according to an embodiment of the present disclosure. As shown in FIG. 1, the wireless communication system is a communication system based on a cellular mobile communication technology, and it includes several UEs 110 and several base stations 120.

The UE 110 may be a device for providing voice and/or data connectivity to a user. The UE 110 may communicate with one or more core networks via a Radio Access Network (RAN). The UE 110 may be an Internet of Things (IoT) UE, e.g., a sensor device or a mobile phone (also called as cellular phone), or a computer having the IoT UE, e.g., an immobile, portable, pocket-sized, handheld, built-in or vehicle-mounted device. For example, the UE may be a Station (STA), a subscriber unit, a subscriber station, a mobile station, a mobile, a remote station, an access point, a remote terminal, an access terminal, a user terminal, a user agent, a user device or UE. The UE 110 may also be a device for an unmanned aerial vehicle. The UE 110 may also be a vehicle-mounted device, e.g., an electronic control unit having a wireless communication function, or a wireless terminal coupled to an external electronic control unit. Alternatively, the UE 110 may also be a roadside device, e.g., a street lamp or a signal lamp having a wireless communication function, or any other roadside devices.

The base station 120 may be a network side device in a wireless communication system. The wireless communication system may be a 4^{th}-Generation (4G) communication system, also called as Long-Term Evolution (LTE) system, or a 5^{th}-Generation (5G) system, also called as New Radio (NR) system or 5G NR system. Alternatively, the wireless communication system may also be a next-generation system of the 5G system. An access network in the 5G system may be called as a New Generation-Radio Access Network (NG-RAN).

The base station 120 may be an evolved Node B (eNB) used in the 4G system, or a base station (gNB) with centralized/distributed architecture in the 5G system. In a case that the base station 120 has the centralized/distributed architecture, usually it includes a CU and at least two DUs. The CU is provided with a protocol stack for a Packet Data Convergence Protocol (PDCP) layer, a Radio Link Control (RLC) layer and a Media Access Control (MAC) layer. The DU is provided with a protocol stack for a Physical (PHY) layer. In the embodiments of the present disclosure, a specific implementation mode of the base station 120 will not be particularly defined.

Wireless connection is established between the base station 120 and the UE 110 via a wireless air interface. In different implementation modes, the wireless air interface is a wireless air interface based on a standard of a 4G mobile communication network technology; or the wireless air interface is a wireless air interface based on a standard of a 5G mobile communication network technology, e.g., a new air interface; or the wireless air interface is a wireless air interface based on a standard of a mobile communication network technology next to the 5G mobile communication network technology.

In some embodiments of the present disclosure, End to End (E2E) connection may also be established between the UEs 110, e.g., in such scenarios as vehicle to vehicle (V2V) communication, vehicle to Infrastructure (V2I) communication and vehicle to pedestrian (V2P) communication in vehicle to everything (V2X).

Here, the UE may be considered as a terminal device in the following embodiments.

In some embodiments of the present disclosure, the wireless communication system may also include a network management device 130.

The base stations 120 are coupled to the network management device 130. The network management device 130 may be a core network device in the wireless communication system, e.g., the network management device 130 may be a Mobility Management Entity (MME) in an Evolved Packet Core (EPC). Alternatively, the network management device may also be any other core network device, e.g., Serving GateWay (SGW), Public Data Network GateWay (PGW), Policy and Charging Rules Function (PCRF) or Home Subscriber Server (HSS). An implementation mode of the network management device 130 will not be particularly defined herein.

For ease of understanding, a plurality of implementation modes has been listed to clearly describe the technical solutions in the embodiments of the present disclosure. Of course, it should be appreciated that, the embodiments of the present disclosure may be performed individually, or performed in combination with the method in the other embodiments, or performed, individually or after the combination with the method, together with some other methods known in the related art, which will not be particularly defined herein.

In order to understand the technical solution described in any embodiment of the present disclosure in a better manner, positioning in related art will be described partially hereinafter at first.

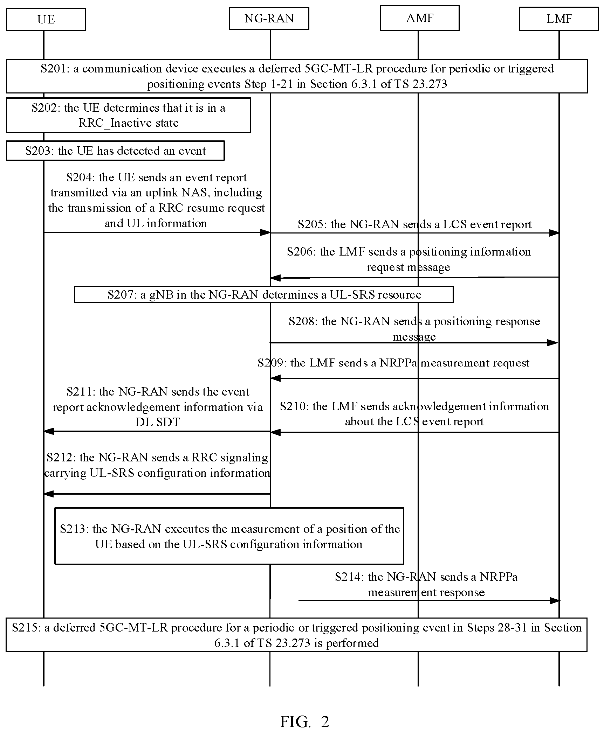

In one embodiment of the present disclosure, the positioning of a Radio Resource Control Inactive (RRC_inactive) UE is supported in R17. As shown in FIG. 2, an uplink positioning procedure of the RRC_Inactive UE includes the following steps.

Step S201: a communication device executes a deferred 5GC-MT-LR procedure for periodic or triggered positioning events Step 1-21 in Section 6.3.1 of TS 23.273.

Here, the communication device includes at least one of: a UE, a NG-RA, an Access and Mobility Management Function (AMF), or a Positioning Management Function (LMF).

Step S202: the UE determines that it is in an RRC_Inactive state.

Step S203: the UE has detected an event.

Step S204: the UE sends an event report transmitted via an uplink Non-Access Stratum (NAS), including the transmission of an RRC resume request and Uplink (UL) information.

Step S205: an NG-RAN sends a Location Service (LCS) event report.

Step S206: a LMF sends a positioning information request message.

Step S207: a gNB in the NG-RAN determines a UL-SRS resource.

Step S208: the NG-RAN sends a positioning response message.

Step S209: the LMF sends a NRPPa measurement request.

Step S210: the LMF sends acknowledgement information about the LCS event report.

Step S211: the NG-RAN sends the event report acknowledgement information via DL SDT.

Step S212: the NG-RAN sends an RRC signaling carrying UL-SRS configuration information.

Step S213: the NG-RAN executes the measurement of a position of the UE based on the UL-SRS configuration information.

Step S214: the NG-RAN sends a NRPPa measurement response.

Step S215: a deferred 5GC-MT-LR procedure for a periodic or triggered positioning event in Steps 28-31 in Section 6.3.1 of TS 23.273 is performed.

In the above embodiments, the NG-RAN generates configuration information for the positioning in the RRC_inactive state in Step S206, e.g., SRS configuration-related information in the RRC_Inactive state, and then sends it to the UE in Step S210.

In a case that the NG-RAN is a NG-RAN under a CU-DU separate architecture, the SRS configuration-related information should be generated by the gNB-DU, and finally the SRS configuration-related information is finally sent by the gNB-CU to the RRC_Inactive UE. Hence, the gNB-DU needs to send the SRS configuration-related information to the gNB-CU. In the embodiments of the present disclosure, SRS-related configuration information includes SRS configuration information and newly-added specific configuration information in the RRC_Inactive state.

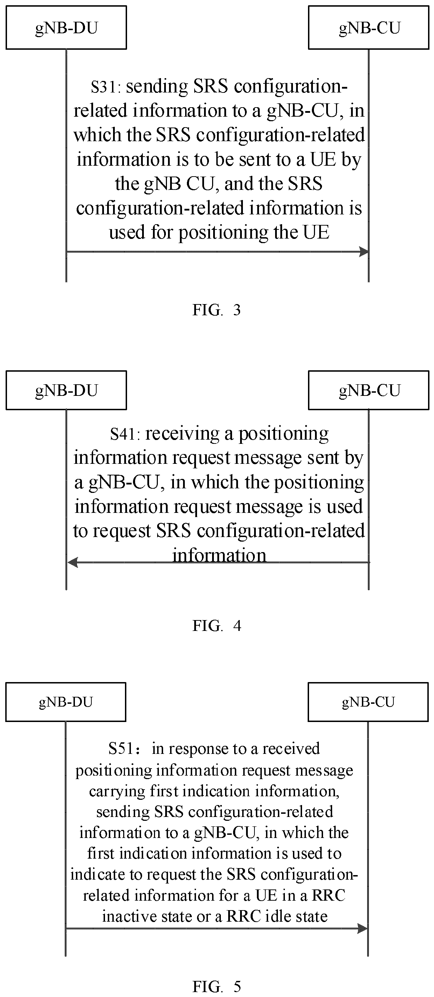

As shown in FIG. 3, the present disclosure provides in some embodiments a positioning configuration information processing method, performed by a gNB-DU, which includes the following step.

Step S31: SRS configuration-related information is sent to a gNB-CU, the SRS configuration-related information is to be sent to a UE by the gNB CU, and the SRS configuration-related information is used for positioning the UE.

The gNB-DU and gNB-CU involved in the embodiments of the present disclosure may be a DU and a CU of the other base station. The base station may include, but not limited to, various base stations, e.g., a 2G base station, a 3G base station, a 4G base station, a 5G base station, or any other evolved base station, as long as the base station is provided with the CU-DU architecture. Here, the gNB-DU and the gNB-CU may be deployed as one piece or separately.

In some embodiments of the present disclosure, Step S31 includes, in response to determining that the UE is in an RRC inactive state or an RRC idle state, sending the SRS configuration-related information to the gNB-CU, and the SRS configuration-related information is sent by the gNB-CU to the UE. The SRS configuration-related information is used for positioning the UE.

The sending the SRS configuration-related information to the gNB-CU is performed by the gNB-DU spontaneously in a case that a specific condition is met, or performed upon the receipt of a request. A circumstance where the SRS configuration-related information is sent upon the receipt of the request will be described hereinafter.

The gNB-DU and gNB-CU involved in the embodiments of the present disclosure may be replaced with a first network node and a second network node. The first network node and the second network node may be network elements or functions of an access network or a core network. The first network node and the second network node may be logic nodes flexibly deployed in a communication network, which will not be particularly defined herein.

The UE involved in the embodiments of the present disclosure may be various mobile terminals or fixed terminals. For example, the UE may include, but not limited to, a mobile phone, a computer, a server, a wearable device, a vehicle-mounted terminal, a Road Side Unit (RSU), a game console, or a multimedia device.

In some embodiments of the present disclosure, the UE may be a UE in an RRC non-connected state and/or a UE in an RRC connected state. The UE in the non-connected state includes a UE in the RRC inactive state and/or a UE in the RRC idle state.

In the embodiments of the present disclosure, the SRS configuration-related information may also be positioning configuration-related information. Here, the positioning configuration-related information includes, but not limited to, the SRS configuration-related information. Here, the positioning configuration-related information may also be information related to the other signal configuration, as long as the positioning configuration-related information is used for positioning the UE. The positioning configuration-related information will not be particularly limited herein.

For example, the present disclosure provides in some embodiments a positioning configuration information processing method, performed by a gNB-DU, which includes sending positioning configuration-related information to a gNB-CU. The positioning configuration-related information is sent by the gNB-CU to a UE for positioning the UE.

In some embodiments of the present disclosure, the SRS configuration-related information is used for positioning the UE in an RRC inactive state or an RRC idle state.

The present disclosure provides in some embodiments a positioning configuration information processing method, performed by a gNB-DU, which includes sending SRS configuration-related information to a gNB-CU. The SRS configuration-related information is to be sent by the gNB-CU to a UE. The SRS configuration-related information is used for positioning the UE in an RRC inactive state or an RRC idle state.

In this regard, in the embodiments of the present disclosure, the gNB-DU sends the SRS configuration-related information to the UE in an RRC non-connected state (e.g., the UE in the RRC inactive state or the UE in the RRC idle state) via the gNB-CU, so as to position the UE in the RRC non-connected state.

Here, the SRS configuration-related information is used for positioning the UE. The positioning of the UE includes, but not limited to, at least one of the following operations: determining the sending of a SRS, determining the releasing of the SRS, and/or determining a mode for sending the SRS. Here, the determining the sending of the SRS at least includes determining when the SRS is to be sent, and the determining the releasing of the SRS at least includes determining when the SRS is to be released.

In some embodiments of the present disclosure, the SRS configuration-related information includes at least one of: a first type of configuration information for positioning the UE in the RRC inactive state or the RRC idle state; or a second type of configuration information for positioning the UE in the RRC inactive state or the RRC idle state.

The first type of configuration information includes at least one of time-frequency resources or period information.

The second type of configuration information includes at least one of: BandWidth Part (BWP) information; Reference Signal Receiving Power (RSRP) threshold information for validating a Time Alignment (TA); downlink path loss reference information for validating the TA; absolute RSRP threshold information about a Synchronization Signal Block (SSB) set for a downlink path loss reference for validating the TA; or TA timing information for indicating SRS positioning transmission.

In some embodiments of the present disclosure, the BWP information includes: a Supplementary Uplink BWP (BWP-SUL); and/or a Normal Uplink BWP (BWP-NUL).

In some embodiments of the present disclosure, the RSRP threshold information includes at least one of: second indication information for indicating to increase a RSRP threshold; or third indication information for indicating to reduce the RSRP threshold.

Here, the second type of configuration information is used to indicate a time for sending the SRS configuration-related information and/or a time for releasing the SRS configuration-related information.

For example, the first type of configuration information is srs-PosRRCInactiveConfig.

For example, the RSRP threshold information is inactivePosSRS-RSRP-changeThresh.

For example, the downlink path loss reference information is inactivePosSRS-NrofSS-BlocksToAverage.

For example, the absolute RSRP threshold information about the SSB set for the downlink path loss reference is inactivePosSRS-AbsThreshSS-BlocksConsolidation.

For example, the TA timing information is a TA timer. For example, the TA timing information is srs-TimeAlignmnetTimer.

Of course, in some other embodiments of the present disclosure, the first type of configuration information may be the other positioning configuration information; and/or the second type configuration information may be the other positioning configuration information. For example, in some embodiments of the present disclosure, the first type of configuration information may be existing SRS configuration-related information in R17; and the second type of configuration information may be newly-added SRS configuration-related information.

In the embodiments of the present disclosure, the gNB-DU sends the SRS configuration-related information to the gNB-CU, the gNB-CU sends the SRS configuration-related information to the UE, and the SRS configuration-related information is used for positioning the UE. Hence, it is able to ensure that the gNB-CU sends the SRS configuration-related information to the UE, thereby to position the UE based on the SRS configuration-related information. As compared with an operation in which the gNB-CU obtains positioning-related information from the gNB-DU based on a UE context modification procedure and then sends it to the UE after the interaction of positioning information, in the embodiments of the present disclosure, the gNB-CU merely needs to directly send the SRS configuration-related information determined by the gNB-DU to the UE, so as to position the UE, thereby to reduce a positioning delay, reduce signaling interaction, and reduce power consumption of the communication device (e.g., the gNB-DU, the gNB-CU and/or the UE). In addition, it is able to further reduce an additional signaling overhead.

It should be appreciated that, the method provided in the embodiments of the present disclosure may be performed individually, or performed in combination with some methods in the embodiments of the present disclosure or some methods known in the related art.

In some embodiments of the present disclosure, in Step 31, the sending the SRS configuration-related information to the gNB-CU includes sending a positioning information response message carrying the SRS configuration-related information to the gNB-CU.

The present disclosure provides in some embodiments a positioning configuration information processing method, performed by a gNB-DU, which includes sending a positioning information response message carrying SRS configuration-related information to a gNB-CU.

For example, the positioning information response message is a Positioning Information Response.

In other words, the gNB-DU sends the positioning information response message carrying the SRS configuration-related information to the gNB-CU, so as to notify the gNB-CU of the SRS configuration-related information. Then, the gNB-CU sends the information to the UE, so as to position the UE.

In this regard, in the embodiments of the present disclosure, by carrying the SRS configuration-related information in the positioning information response message, it is able to further reduce the signaling interaction.

It should be appreciated that, the method in the embodiments of the present disclosure may be performed individually, or performed in combination with some methods in the embodiments of the present disclosure or some methods known in the related art.

As shown in FIG. 4, the present disclosure provides in some embodiments a positioning configuration information processing method, performed by a gNB-DU, which includes the following step.

Step S41: a positioning information request message sent by a gNB-CU is received. The positioning information request message is used to request SRS configuration-related information.

In some embodiments of the present disclosure, the SRS configuration-related information may be the SRS configuration-related information in Step S31, which will not be particularly defined herein.

For example, the positioning information request message may be a Positioning Information Request.

In one embodiment of the present disclosure, the positioning information request message is used to request positioning configuration-related information. In this regard, it is able to request the positioning configuration-related information for positioning via a SRS or the other signal.

**In** other words, the gNB-DU sends the SRS configuration-related information to the gNB-CU based on a request from the gNB-CU. However, it should be appreciated that, the gNB-DU may also send the SRS configuration-related information to the gNB-CU in a case that a specific condition is met. For example, in a case that the gNB-DU determines that the UE is in an inactive state (e.g., there is a currently-running SDT procedure for the UE), the gNB-DU sends the SRS configuration-related information to the gNB-CU.

In one embodiment of the present disclosure, the positioning information request message is used to request the SRS configuration-related information for the UE in the RRC inactive state and/or the UE in the RRC idle state. In this regard, it is able to request the SRS configuration-related information for the UE in the RRC inactive state and/or the UE in the RRC idle state.

**In** some embodiments of the present disclosure, the positioning information response message is determined based on the positioning information request message.

**In** some embodiments of the present disclosure, prior to Step S31, the method includes receiving the positioning information request message sent by the gNB-CU, and the positioning information request message is used to request the SRS configuration-related information.

The present disclosure provides in some embodiments a positioning configuration information processing method, performed by a gNB-DU, which includes the following steps.

A positioning information request message sent by a gNB-CU is received, and the positioning information request message is used to request SRS configuration-related information.

The SRS configuration-related information is sent to the gNB-CU.

**In** this regard, in the embodiments of the present disclosure, the gNB-CU sends request information to the gNB-DU, so as to request the SRS configuration-related configuration information for the UE.

It should be appreciated that, the method in the embodiments of the present disclosure may be performed individually, or performed in combination with some methods in the embodiments of the present disclosure or some methods known in the related art.

In some embodiments of the present disclosure, in Step S31, the sending the SRS configuration-related information to the gNB-CU includes, in response to the positioning information request message carrying first indication information, sending the SRS configuration-related information to the gNB-CU. The first indication information is used to indicate to request the SRS configuration-related information for the UE in the RRC inactive state or the RRC idle state.

As shown in FIG. 5, the present disclosure provides in some embodiments a positioning configuration information processing method, performed by a gNB-DU, which includes the following step.

Step S51: in response to a received positioning information request message carrying first indication information, sending SRS configuration-related information to a gNB-CU. The first indication information is used to indicate to request the SRS configuration-related information for a UE in an RRC inactive state or an RRC idle state.

**In** some embodiments of the present disclosure, the SRS configuration-related information may be the SRS configuration-related information in Step S31.

Here, the SRS configuration-related information is used for positioning the UE in the RRC inactive state or the UE in the RRC idle state.

In this regard, in the embodiments of the present disclosure, in a case that the positioning information request message received by the gNB-DU includes the indication information for indicating to request the SRS configuration-related information for the UE, the gNB-CU sends the SRS configuration-related information to the UE in the RRC inactive state or the UE in the RRC idle state, so as to position the UE in the RRC inactive state or the UE in the RRC idle state. Here, in the embodiments of the present disclosure, via a direction indication in the positioning information request message, the gNB-DU sends the SRS configuration-related information for the UE in the RRC inactive state or the UE in the RRC idle state.

In some embodiments of the present disclosure, in Step S31, the sending the SRS configuration-related information to the gNB-CU includes, in response to determining that the UE is in the RRC inactive state or the RRC idle state, sending the SRS configuration-related information to the gNB-CU.

The present disclosure provides in some embodiments a positioning configuration information processing method, performed by a gNB-DU, which includes, in response to determining that a UE is in an RRC inactive state or an RRC idle state, sending SRS configuration-related information to a gNB-CU.

The present disclosure provides in some embodiments a positioning configuration information processing method, performed by a gNB-DU, which includes, in response to receiving a positioning information request message and determining that the a is in an RRC inactive state or an RRC idle state, sending SRS configuration-related information to a gNB-CU.

Here, the positioning information request message may not include the first indication information. At this time, the positioning information request message is used to request the SRS configuration-related information. The SRS configuration-related information may be adapted to the UE in any state, e.g., the UE in the RRC inactive state, the UE in the RRC idle state, or the UE in an RRC connected state.

**In** this regard, in the embodiments of the present disclosure, in a case that the gNB-DU determines that the UE is in the RRC inactive state or the RRC idle state, the SRS configuration-related information for the UE in the RRC inactive state or the RRC idle state is sent to the gNB-CU. Hence, the positioning information request message is provided with better bits, and information about the other operations is carried by more additional bits in the positioning information request message.

The present disclosure provides in some embodiments a positioning configuration information processing method, performed by a gNB-DU, which includes determining that a UE is in an RRC inactive state based on the UE being accessing with a Small Data Transmission (SDT).

Of course, in the other embodiments of the present disclosure, whether or not the UE is in the RRC inactive state or the RRC idle state is determined by any feasible way.

In the embodiments of the present disclosure, by determining whether or not the UE is accessing with the SDT, it is able to accurately determine whether or not the UE is in the RRC inactive state.

**It** should be appreciated that, the method in the embodiments of the present disclosure may be performed individually, or performed in combination with some methods in the embodiments of the present disclosure or some methods known in the related art.

A positioning configuration information processing method performed by a gNB-CU will be described hereinafter, and the description about this method is similar to the description about the above-mentioned positioning configuration information processing method performed by the gNB-DU. In addition, any technical details not disclosed in the embodiments involving the positioning configuration information processing method performed by the gNB-CU may refer to the description about the positioning configuration information processing method performed by the gNB-DU, and thus will not be particularly defined herein.

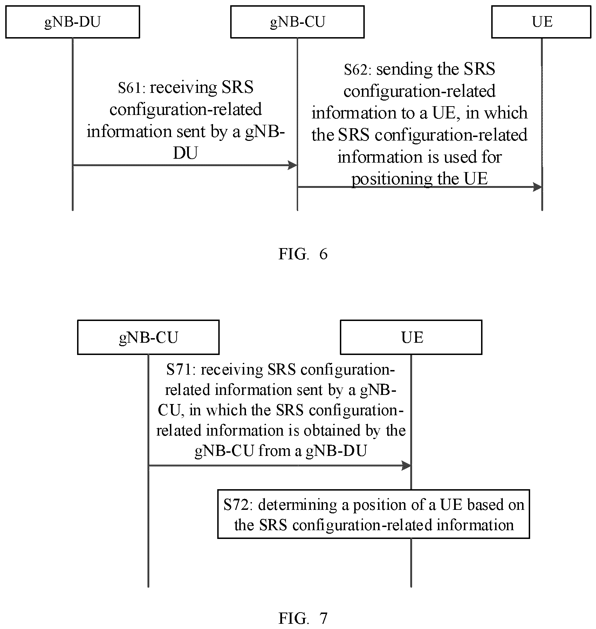

As shown in FIG. 6, the present disclosure provides in some embodiments a positioning configuration information processing method, performed by a gNB-CU, which includes the following steps.

Step S61: SRS configuration-related information sent by a gNB-DU is received.

Step S62: the SRS configuration-related information is sent to a UE. The SRS configuration-related information is used for positioning the UE.

In some embodiments of the present disclosure, the gNB-DU and the gNB-CU may be the gNB-DU and gNB-CU in the above-mentioned embodiments, and the positioning of the UE may be the position of the UE in the above-mentioned embodiments. The SRS configuration-related information may be the SRS configuration-related information in Step S31 or the above-mentioned embodiments.

For example, the SRS configuration-related information is used for positioning the UE in an RRC inactive state or an RRC idle state.

For example, the SRS configuration-related information includes at least one of: a first type of configuration information for positioning the UE in the RRC inactive state or the RRC idle state; or a second type of configuration information for positioning the UE in the RRC inactive state or the RRC idle state.

The first type of configuration information includes at least one of time-frequency resources or period information.

The second type of configuration information includes at least one of: BWP information; RSRP threshold information for validating a TA; downlink path loss reference information for validating the TA; absolute RSRP threshold information about a SSB set for a downlink path loss reference for validating the TA; or TA timing information for indicating SRS positioning transmission.

For example, the BWP information includes: a BWP-SUL; and/or a BWP-NUL.

For example, the RSRP threshold information includes at least one of: second indication information for indicating to increase a RSRP threshold; or third indication information for indicating to reduce the RSRP threshold.

Here, the second type of configuration information is used to indicate a time for sending the SRS configuration-related information and/or a time for releasing the SRS configuration-related information.

For example, the first type of configuration information is srs-PosRRCInactiveConfig.

For example, the RSRP threshold information is inactivePosSRS-RSRP-changeThresh.

For example, the downlink path loss reference information is inactivePosSRS-NrofSS-BlocksToAverage.

For example, the absolute RSRP threshold information about the SSB set for the downlink path loss reference is inactivePosSRS-AbsThreshSS-BlocksConsolidation.

For example, the TAtiming information is a TA timer. For example, the TA timing information is srs-TimeAlignmnetTimer.

To be specific, the implementation may refer to that for the gNB-DU mentioned hereinabove, and thus will not be particularly defined herein.

It should be appreciated that, the method provided in the embodiments of the present disclosure may be performed individually, or performed in combination with some methods in the embodiments of the present disclosure or some methods known in the related art.

In some embodiments of the present disclosure, in Step S62, the sending the SRS configuration-related information to the UE includes sending an RRC signaling carrying the SRS configuration-related information to the UE.

The present disclosure provides in some embodiments a positioning configuration information processing method, performed by a gNB-CU, which includes sending an RRC signaling carrying the SRS configuration-related information to the UE.

Here, the RRC signaling includes, but not limited to, one of: an RRC Release message; or an RRC Reconfiguration message.

For example, the gNB-CU sends the RRC Release message to the UE, and the RRC Release message carries the SRS configuration-related information.

For example, the gNB-CU sends the RRC Reconfiguration message to the UE, and the RRC Reconfiguration message carries the SRS configuration-related information.

In this regard, in the embodiments of the present disclosure, the SRS configuration-related information is sent via the RRC signaling, to as to achieve two functions via one signaling or message, thereby to further reduce signaling or message interaction, improve a utilization rate of the signaling or message, and further reduce the power consumption of the communication device. For example, in a case that the RRC signaling is the RRC Release message, the UE achieves the RRC releasing and obtains the SRS configuration-related information based on the RRC Release message, so two functions are achieved via one RRC Release message. For another example, in a case that the RRC signaling is the RRC Reconfiguration message, the UE achieves the RRC reconfiguration and obtains the SRS configuration-related information based on the RRC Reconfiguration message, so two functions are achieved via one RRC Reconfiguration message.

It should be appreciated that, the method provided in the embodiments of the present disclosure may be performed individually, or performed in combination with some methods in the embodiments of the present disclosure or some methods known in the related art.

The present disclosure provides in some embodiments a positioning configuration information processing method, performed by a gNB-CU, which includes sending a positioning information request message to a gNB-DU. The positioning information request message is used to request the SRS configuration-related information.

In some embodiments of the present disclosure, the positioning information request message may be the positioning information request message in Step S41. For example, the positioning information request message may be a Positioning Information Request.

In some embodiments of the present disclosure, Step S61 includes receiving a positioning information response message carrying the SRS configuration-related information sent by the gNB-DU.

The present disclosure provides in some embodiments a positioning configuration information processing method, performed by a gNB-CU, which includes receiving a positioning information response message carrying the SRS configuration-related information sent by the gNB-DU.

In some embodiments of the present disclosure, the positioning information response message may be the positioning information response message in the above embodiments. For example, the positioning information response message may be a Positioning Information Response.

**In** some embodiments of the present disclosure, the sending the positioning information request message to the gNB-DU includes sending the positioning information request message carrying first indication information to the gNB-DU. The first indication information is used to indicate to request the SRS configuration-related information for the UE in an RRC inactive state or an RRC idle state.

The present disclosure provides in some embodiments a positioning configuration information processing method, performed by a gNB-CU, which includes sending a positioning information request message carrying first indication information to a gNB-DU. The first indication information is used to indicate to request the configuration-related information for a UE in an RRC inactive state or an RRC idle state.

To be specific, the implementation may refer to that for the gNB-DU mentioned hereinabove, and thus will not be particularly defined herein.

It should be appreciated that, the method provided in the embodiments of the present disclosure may be performed individually, or performed in combination with some methods in the embodiments of the present disclosure or some methods known in the related art.

A positioning configuration information processing method performed by a UE will be described hereinafter, and the description about this method is similar to the description about the above-mentioned positioning configuration information processing method performed by the gNB-DU and/or gNB-CU. In addition, any technical details not disclosed in the embodiments involving the positioning configuration information processing method performed by the UE may refer to the description about the positioning configuration information processing method performed by the gNB-DU and/or gNB-CU, and thus will not be particularly defined herein.

As shown in FIG. 7, the present disclosure provides in some embodiments a positioning configuration information processing method, performed by a UE, which includes the following steps.

Step S71: SRS configuration-related information sent by a gNB-CU is received. The SRS configuration-related information is obtained by the gNB-CU from a gNB-DU.

Step S72: a position of the UE is determined based on the SRS configuration-related information.

In some embodiments of the present disclosure, the gNB-DU and the gNB-CU may be the gNB-DU and the gNB-CU in the above-mentioned embodiments, and the position of the UE may be the position of the UE in the above-mentioned embodiments. The SRS configuration-related information may be the SRS configuration-related information in Step S31 or the above-mentioned embodiments.

For example, the SRS configuration-related information is used for positioning the UE in an RRC inactive state or an RRC idle state.

For example, the SRS configuration-related information includes at least one of: a first type of configuration information for positioning the UE in the RRC inactive state or the RRC idle state; or a second type of configuration information for positioning the UE in the RRC inactive state or the RRC idle state.

The first type of configuration information includes at least one of time-frequency resources or period information.

The second type of configuration information includes at least one of: BWP information; RSRP threshold information for validating a TA; downlink path loss reference information for validating the TA; absolute RSRP threshold information about a SSB set for a downlink path loss reference for validating the TA; or TA timing information for indicating SRS positioning transmission.

For example, the BWP information includes: a BWP-SUL; and/or a BWP-NUL.

For example, the RSRP threshold information includes at least one of: second indication information for indicating to increase a RSRP threshold; or third indication information for indicating to reduce the RSRP threshold.

Here, the second type of configuration information is used to indicate a time for sending the SRS configuration-related information and/or a time for releasing the SRS configuration-related information.

For example, the first type of configuration information is srs-PosRRCInactiveConfig.

For example, the RSRP threshold information is inactivePosSRS-RSRP-changeThresh.

For example, the downlink path loss reference information is inactivePosSRS-NrofSS-BlocksToAverage.

For example, the absolute RSRP threshold information about the SSB set for the downlink path loss reference is inactivePosSRS-AbsThreshSS-BlocksConsolidation.

For example, the TAtiming information is a TA timer. For example, the TA timing information is srs-TimeAlignmnetTimer.

In some embodiments of the present disclosure, in Step S72, the determining the position of the UE includes, but not limited to, at least one of the following operations: determining the sending of a SRS, determining the releasing of the SRS, and/or determining a mode for sending the SRS. Here, the determining the sending of the SRS at least includes determining when the SRS is to be sent, and the determining the releasing of the SRS at least includes determining when the SRS is to be released.

In some other embodiments of the present disclosure, in Step S72, the determining the position of the UE includes executing a positioning operation.

In yet some embodiments of the present disclosure, in Step S72, the determining the position of the UE at least includes sending a SRS for positioning.

In still yet some embodiments of the present disclosure, in Step S72, the determining the position of the UE at least includes stopping sending the SRS for positioning.

**In** some embodiments of the present disclosure, in Step S71, the receiving the SRS configuration-related information sent by the gNB-CU includes receiving an RRC signaling carrying the SRS configuration-related information sent by the gNB-CU.

The present disclosure provides in some embodiments a positioning configuration information processing method, performed by a UE, which includes receiving an RRC signaling carrying SRS configuration-related information sent by a gNB-CU.

The present disclosure provides in some embodiments a positioning configuration information processing method, performed by a UE, which includes receiving an RRC Release message sent by a gNB-CU. The RRC Release message carries SRS configuration-related information.

The present disclosure provides in some embodiments a positioning configuration information processing method, performed by a UE, which includes receiving an RRC Reconfiguration message sent by a gNB-CU. The RRC Reconfiguration message carries SRS configuration-related information.

To be specific, the implementation may refer to that for the gNB-DU and/or the gNB-CU mentioned hereinabove, and thus will not be particularly defined herein.

It should be appreciated that, the method provided in the embodiments of the present disclosure may be performed individually, or performed in combination with some methods in the embodiments of the present disclosure or some methods known in the related art.

For further explanation, a specific embodiment will be provided hereinafter.

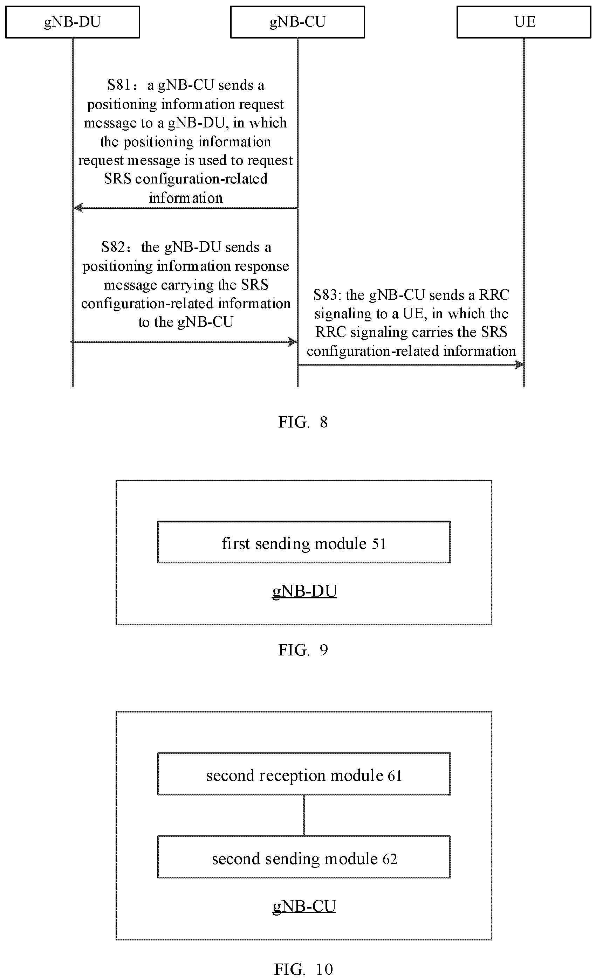

As shown in FIG. 8, the present disclosure provides in some embodiments a positioning configuration information processing method, performed by a communication device. The communication device includes a gNB-DU, a gNB-CU or a UE. The positioning configuration information processing method includes the following steps.

Step S81: the gNB-CU sends a Positioning Information Request message to the gNB-DU, and the Positioning Information Request message is used to request SRS configuration-related information.

Optionally, in one embodiment of the present disclosure, the Positioning Information Request message carries first indication information, and the first indication information is used to indicate to request the SRS configuration-related information for the UE in an RRC inactive state or an RRC idle state.

Here, the first indication information is an Inactive Positioning Indication.

Optionally, in one embodiment of the present disclosure, the gNB-CU determines the SRS configuration-related information.

Step S82: the gNB-DU sends a positioning information response message (Positioning Information Response message) carrying the SRS configuration-related information to a gNB-CU.

Optionally, in one embodiment of the present disclosure, the gNB-DU receives the Positioning Information Request message sent by the gNB-CU, and sends the SRS configuration-related information to the UE in response to determining that the Positioning Information Request message carries the first indication information.

In a possible embodiment of the present disclosure, the SRS configuration-related information includes a first type of configuration information. The first type of configuration information includes time-frequency resources and/or period information. For example, the first type of configuration information is srs-PosRRCInactiveConfig.

In another possible embodiment of the present disclosure, the SRS configuration-related information includes a second type of configuration information. The second type of configuration information includes at least one of: BWP information; RSRP threshold information for validating a TA; downlink path loss reference information for validating the TA; absolute RSRP threshold information about a SSB set for a downlink path loss reference for validating the TA; or TA timing information for indicating SRS positioning transmission. The BWP information includes: a BWP-SUL; and/or BWP-NUL. The RSRP threshold information includes at least one of: second indication information for indicating to increase an RSRP threshold; or third indication information for indicating to reduce the RSRP threshold.

For example, the RSRP threshold information is inactivePosSRS-RSRP-changeThresh.

For example, the downlink path loss reference information is inactivePosSRS-NrofSS-BlocksToAverage.

For example, the absolute RSRP threshold information about the SSB set for the downlink path loss reference is inactivePosSRS-AbsThreshSS-BlocksConsolidation.

For example, the TA timing information is a TA timer. For example, the TA timing information is srs-TimeAlignmnetTimer.

Step S83: the gNB-CU sends an RRC signaling to the UE. The RRC signaling carries the SRS configuration-related information.

In a possible embodiment of the present disclosure, the gNB-CU sends an RRC Release message to the UE, and the RRC Release message carries the SRS configuration-related information.

In another possible embodiment of the present disclosure, the gNB-CU sends an RRC Reconfiguration message to the UE, and the RRC Reconfiguration message carries the SRS configuration-related information.

In the embodiments of the present disclosure, under a CU-DU architecture, the CU (e.g., the gNB-CU) obtains the SRS configuration-related information determined by the DU (gNB-DU) and used for positioning the UE in the RRC inactive state or the RRC idle state, so it is able to ensure that the CU transfers the SRS configuration-related information to the UE, thereby to position the UE in the RRC inactive state or RRC idle state. In addition, in the embodiments of the present disclosure, an existing positioning procedure and existing information are used to transfer the SRS configuration-related information, and directly transfer the information to the UE via the CU, so as to reduce the signaling overhead and the positioning delay in a better manner, and prevent an unnecessary waste of signaling.

It should be appreciated that, the method provided in the embodiments of the present disclosure may be performed individually, or performed in combination with some methods in the embodiments of the present disclosure or some methods known in the related art.

As shown in FIG. 9, the present disclosure provides in some embodiments a positioning configuration information processing apparatus, applied to a gNB-DU, which includes a first sending module 51 configured to send SRS configuration-related information to a gNB-CU. The SRS configuration-related information is to be sent to a UE by the gNB CU and the SRS configuration-related information is used for positioning the UE.

In some embodiments of the present disclosure, the SRS configuration-related information is used for positioning the UE in an RRC inactive state or an RRC idle state.

The present disclosure provides in some embodiments a positioning configuration information processing apparatus, applied to a gNB-DU, which includes a first reception module configured to receive a positioning information request message sent by a gNB-CU. The positioning information request message is used to request SRS configuration-related information.

The present disclosure provides in some embodiments a positioning configuration information processing apparatus, applied to a gNB-DU, which includes a first sending module 51 configured to send a positioning information response message carrying SRS configuration-related information to a gNB-CU.

The present disclosure provides in some embodiments a positioning configuration information processing apparatus, applied to a gNB-DU, which includes a first sending module 51 configured to, in response to a positioning information request message carrying first indication information, send SRS configuration-related information to a gNB-CU. The first indication information is used to request the SRS configuration-related information for a UE in an RRC inactive state or RRC idle state.

The present disclosure provides in some embodiments a positioning configuration information processing apparatus, applied to a gNB-DU, which includes a first sending module 51 configured to, in response to determining that a UE is in an RRC inactive state or RRC idle state, send SRS configuration-related information to a gNB-CU.

The present disclosure provides in some embodiments a positioning configuration information processing apparatus, applied to a gNB-DU, which includes a first processing module configured to determine that a UE is in an RRC inactive state based on that the UE is accessing with a SDT.

In some embodiments of the present disclosure, the SRS configuration-related information includes at least one of: a first type of configuration information for positioning the UE in the RRC inactive state or the RRC idle state; or a second type of configuration information for positioning the UE in the RRC inactive state or the RRC idle state.

The first type of configuration information includes at least one of time-frequency resources or period information.

The second type of configuration information includes at least one of: BWP information; RSRP threshold information for validating a TA; downlink path loss reference information for validating the TA; absolute RSRP threshold information about a SSB set for a downlink path loss reference for validating the TA; or TA timing information for indicating SRS positioning transmission.

In some embodiments of the present disclosure, the BWP information includes: a BWP-SUL; and/or a BWP-NUL.

In some embodiments of the present disclosure, the RSRP threshold information includes at least one of: second indication information for indicating to increase an RSRP threshold; or third indication information for indicating to reduce the RSRP threshold.

As shown in FIG. 10, the present disclosure provides in some embodiments a positioning configuration information processing apparatus, applied to a gNB-CU, which includes a second reception module 61 and a second sending module 62.

The second reception module 61 is configured to receive SRS configuration-related information sent by a gNB-DU.

The second sending module is configured to send the SRS configuration-related information to a UE, and the SRS configuration-related information is used for positioning the UE

The present disclosure provides in some embodiments a positioning configuration information processing apparatus, applied to a gNB-CU, which includes a second sending module 62 configured to send an RRC signaling carrying SRS configuration-related information to a UE.

The present disclosure provides in some embodiments a positioning configuration information processing apparatus, applied to a gNB-CU, which includes a second sending module 62 configured to send an RRC Release message carrying the SRS configuration-related information to a UE.

The present disclosure provides in some embodiments a positioning configuration information processing apparatus, applied to a gNB-CU, which includes a second sending module 62 configured to send an RRC Reconfiguration message to a UE.

In some embodiments of the present disclosure, the SRS configuration-related information is used for positioning the UE in an RRC inactive state or an RRC idle state.

The present disclosure provides in some embodiments a positioning configuration information processing apparatus, applied to a gNB-CU, which includes a second sending module 62 configured to send a positioning information request message to a gNB-DU. The positioning information request message is used to request SRS configuration-related information.

The present disclosure provides in some embodiments a positioning configuration information processing apparatus, applied to a gNB-CU, which includes a second reception module 61 configured to receive a positioning information response message carrying SRS configuration-related information sent by a gNB-DU.

The present disclosure provides in some embodiments a positioning configuration information processing apparatus, applied to a gNB-CU, which includes a second sending module 62 configured to send a positioning information request message carrying first indication information to a gNB-DU. The first indication information is used to indicate to request SRS configuration-related information for a UE in an RRC inactive state or an RRC idle state.

In some embodiments of the present disclosure, the SRS configuration-related information includes at least one of: a first type of configuration information for positioning the UE in the RRC inactive state or the RRC idle state; or a second type of configuration information for positioning the UE in the RRC inactive state or the RRC idle state.

The first type of configuration information includes at least one of time-frequency resources or period information.

The second type of configuration information includes at least one of: BWP information; RSRP threshold information for validating a TA; downlink path loss reference information for validating the TA; absolute RSRP threshold information about a SSB set for a downlink path loss reference for validating the TA; or TA timing information for indicating SRS positioning transmission.

In some embodiments of the present disclosure, the BWP information includes: a BWP-SUL; and/or a BWP-NUL.

In some embodiments of the present disclosure, the RSRP threshold information includes at least one of: second indication information for indicating to increase a RSRP threshold; or third indication information for indicating to reduce the RSRP threshold.

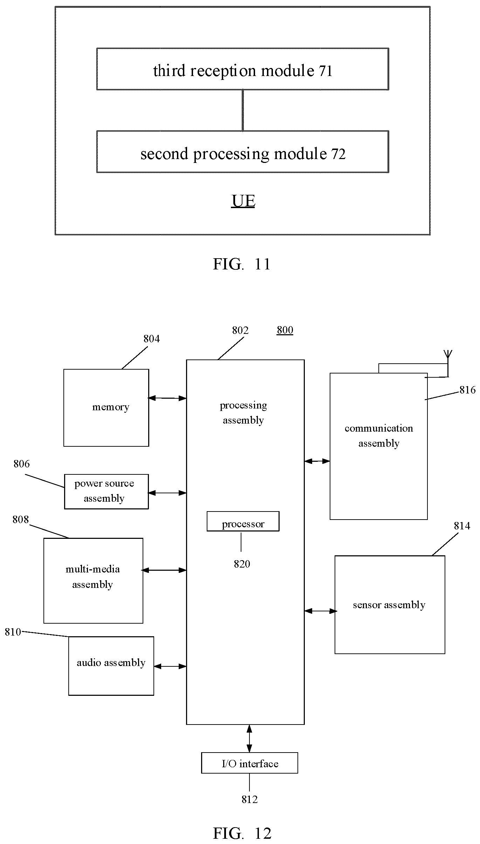

As shown in FIG. 11, the present disclosure provides in some embodiments a positioning configuration information processing apparatus, applied to a UE, which includes a third reception module 71 and a second processing module 72.

The third reception module 71 is configured to receive SRS configuration-related information sent by a gNB-CU, and the SRS configuration-related information is obtained by the gNB-CU from a gNB-DU.

The second processing module 72 is configured to determine a position of the UE based on the SRS configuration-related information.

The present disclosure provides in some embodiments a positioning configuration information processing apparatus, applied to a UW, which includes a third reception module 71 configured to receive an RRC signaling carrying SRS configuration-related information sent by a gNB-CU.

The present disclosure provides in some embodiments a positioning configuration information processing apparatus, applied to a UW, which includes a third reception module 71 configured to receive an RRC Release message carrying SRS configuration-related information sent by a gNB-CU.

The present disclosure provides in some embodiments a positioning configuration information processing apparatus, applied to a UW, which includes a third reception module 71 configured to receive an RRC Reconfiguration carrying SRS configuration-related information sent by a gNB-CU.

In some embodiments of the present disclosure, the SRS configuration-related information includes at least one of: a first type of configuration information for positioning the UE in the RRC inactive state or the RRC idle state; or a second type of configuration information for positioning the UE in the RRC inactive state or the RRC idle state.

The first type of configuration information includes at least one of time-frequency resources and period information.

The second type of configuration information includes at least one of: BWP information; RSRP threshold information for validating a TA; downlink path loss reference information for validating the TA; absolute RSRP threshold information about a SSB set for a downlink path loss reference for validating the TA; or TA timing information for indicating SRS positioning transmission.

In some embodiments of the present disclosure, the BWP information includes: a BWP-SUL; and/or a BWP-NUL.

In some embodiments of the present disclosure, the RSRP threshold information includes at least one of: second indication information for indicating to increase a RSRP threshold; or third indication information for indicating to reduce the RSRP threshold.

It should be appreciated that, the apparatus provided in the embodiments of the present disclosure may be performed individually, or performed in combination with some apparatuses in the embodiments of the present disclosure or some apparatuses known in the related art.

With respect to the apparatus in the embodiments of the present disclosure, a specific mode of performing the operations by each module has already been described in details in the above-mentioned method embodiments, which will not be particularly defined herein.

The present disclosure provides in some embodiments a communication device, which includes: a processor; and a memory storing therein instructions executable by the processor. The processor is configured to run the executable instructions, so as to implement the positioning configuration information processing method in the above-mentioned embodiments of the present disclosure.

In one embodiment of the present disclosure, the communication device includes, but not limited to, at least one of a gNB-DU, a gNB-CU or a UE.

The processor includes various types of storage mediums, and the storage medium is a non-temporary computer storage medium so that the processor is capable of continuously memorizing information stored therein in a case that the communication device is powered off.

The processor is coupled to the memory via a bus, and configured to read an executable program stored in the memory, so as to implement at least one of the methods in FIGs. 3 to 8.

The present disclosure further provides in some embodiments a computer storage medium storing therein a computer-executable program. The computer-executable program is executed by a processor to implement the above-mentioned positioning configuration information processing method, e.g., implement at least one of the methods in FIGs. 3 to 8.

With respect to the apparatus or storage medium in the embodiments of the present disclosure, a specific mode of performing the operations by each module has already been described in details in the above-mentioned method embodiments, which will not be particularly defined herein.

FIG. 12 is a block diagram of a UE 800 according to the embodiments of the present disclosure. For example, the UE 800 is a mobile phone, a computer, a digital broadcasting terminal device, a message transceiver device, a game console, a flat-panel device, medical equipment, fitness equipment, or a personal digital assistant.

As shown in FIG. 12, the UE 800 includes at least one assembly selected from the group consisting of a processing assembly 802, a memory 804, a power source assembly 806, a multi-media assembly 808, an audio assembly 810, an Input/Output (I/O) interface 812, a sensor assembly 814, and a communication assembly 816.

Generally, the processing assembly 802 controls an entire operation of the UE 800, e.g., operations associated with display, phone call, data communication, camera operation and recording operation. The processing assembly 802 includes at least one processor 820 to execute instructions, so as to implement all of, or a part of, the steps of the above-mentioned method. In addition, the processing assembly 802 includes at least one module for the interaction between the processing assembly 802 and the other assembly. For example, the processing assembly 802 includes a multi-media module for the interaction between the multi-media assembly 808 and the processing assembly 802.

The memory 804 is configured to store therein various types of data to support the operation of the UE 800. Examples of such data include instructions for any application or method operated on the UE 800, contact data, phonebook data, messages, pictures, video, etc. The memory 804 may be implemented in the form of any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source assembly 806 provides power to various assemblies of the UE 800. The power source assembly 806 may include a power management system, one or more power sources, and any other assemblies associated with the generation, management and distribution of power in the UE 800.

The multi-media assembly 808 includes a screen for providing an output interface between the UE 800 and a user. In some embodiments of the present dis closure, the screen may include a Liquid Crystal Display (LCD) and a Touch Panel (TP). When the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of time and a pressure associated with the touch or swipe action. In some embodiments of the present disclosure, the multi-media assembly 808 includes a front-facing camera and/or a rear-facing camera. When the UE 800 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio assembly 810 is configured to output and/or input audio signals. For example, the audio assembly 810 includes a microphone (MIC) configured to receive an external audio signal when the UE 800 is in an operating mode, such as a call mode, a recording mode, and a voice recognition mode. The received audio signal may be further stored in the memory 804 or transmitted via the communication assembly 816. In some embodiments of the present disclosure, the audio assembly 810 further includes a speaker to output audio signals.

The I/O interface 812 provides an interface between the processing assembly 802 and peripheral interface modules, such as a keyboard, a click wheel, buttons, and the like. The buttons may include, but not limited to, a home button, a volume button, a starting button, and a locking button.

The sensor assembly 814 includes one or more sensors to provide status assessments about various aspects of the UE 800. For example, the sensor assembly 814 may detect an open/closed status of the UE 800, relative positioning of assemblies, e.g., the display and the keypad, of the UE 800, a change in a position of the UE 800 or an assembly of the UE 800, a presence or absence of user contact with the UE 800, an orientation or an acceleration/deceleration of the UE 800, and a change in a temperature of the UE 800. The sensor assembly 814 may include a proximity sensor configured to detect the presence of nearby objects without any physical contact. The sensor assembly 814 may also include a light sensor, such as a Complementary Metal Oxide Semiconductor (CMOS) or Charge-Coupled Device (CCD) image sensor, for use in imaging applications. In some embodiments of the present disclosure, the sensor assembly 814 may also include an accelerometer sensor, a gyroscope sensor, a magnetic sensor, a pressure sensor, or a temperature sensor.

The communication assembly 816 is configured to facilitate wired or wireless communication between the UE 800 and other devices. The UE 800 may access a wireless network based on a communication standard, such as Wi-Fi, 2G or 3G, or a combination thereof. In an exemplary embodiment of the present disclosure, the communication assembly 816 receives a broadcast signal or broadcast associated information from an external broadcast management system via a broadcast channel. In an exemplary embodiment of the present disclosure, the communication assembly 816 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Blue Tooth (BT) technology, and other technologies.

In the exemplary embodiment of the present disclosure, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above-mentioned method.

The present disclosure further provides in some embodiments a non-temporary computer-readable storage medium including instructions, e.g., the memory 804 including the instructions. The instructions are executed by the processor 820 of the UE 800 to complete the above-mentioned method. For example, the non-temporary computer-readable storage medium may be a ROM, a Random Access Memory (RAM), a CD-ROM, a magnetic tape, a floppy disk, an optical data storage device, etc.

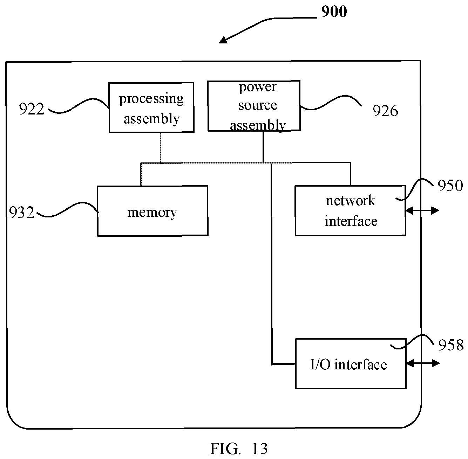

FIG. 13 shows a structure of a base station. For example, the base station 900 may be provided as a network side device. As shown in FIG. 13, the base station 900 includes a processing assembly 922, which further includes one or more processors and memory resources represented by a memory 932 for storing therein instructions to be executed by the processing assembly 922, e.g., applications. The applications stored in the memory 932 may include one or more modules each corresponding to one group of instructions. In addition, the processing assembly 922 is configured to execute the instructions, so as to implement any method for the base station.

The base station 900 further includes a power source assembly 926 configured to performed power management over the base station 900, a wired or wireless network interface 950 configured to couple the base station 900 to a network, and an Input/Output (I/O) interface 958. The base station 900 may be based on an operating system stored in the memory 932, e.g., Windows Server TM, Mac OS XTM, Unix TM, Linux TM, Free BSDTM, or the like.

Other embodiments of the present disclosure will be apparent to those skilled in the art from consideration of the specification and practice of the present disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the appended claims.

It should be appreciated that, the present disclosure is not limited to the exact construction that has been described hereinabove and illustrated in the accompanying drawings, and that various modifications and changes can be made without departing from the scope thereof. It is intended that the scope of the present disclosure only be limited by the appended claims.

## Claims

1. A positioning configuration information processing method, performed by a gNB-Distributed Unit (DU), comprising:
sending Sounding Reference Signal (SRS) configuration-related information to a gNB-Central Unit (CU), wherein the SRS configuration-related information is to be sent to a User Equipment (UE) by the gNB CU and the SRS configuration-related information is used for positioning the UE.

2. The positioning configuration information processing method of claim 1, wherein the SRS configuration-related information is used for positioning the UE in a Radio Resource Control (RRC) inactive state or an RRC idle state.

3. The positioning configuration information processing method of claim 1, wherein prior to sending SRS configuration-related information to a gNB-CU, the positioning configuration information processing method comprises:
receiving a positioning information request message sent by the gNB-CU, wherein the positioning information request message is used to request the SRS configuration-related information.

4. The positioning configuration information processing method of claim 1 or 3, wherein the sending SRS configuration-related information to a gNB-CU comprises:
sending positioning information response message carrying the SRS configuration-related information to the gNB-CU.

5. The positioning configuration information processing method of claim 3, wherein the sending SRS configuration-related information to a gNB-CU comprises:
in response to the positioning information request message carrying first indication information, sending the SRS configuration-related information to the gNB-CU, wherein the first indication information is used to indicate to request the SRS configuration-related information for the UE in an RRC inactive state or an RRC idle state.

6. The positioning configuration information processing method of claim 1, wherein the sending the SRS configuration-related information to the gNB-CU comprises:
in response to determining that the UE is in an RRC inactive state or an RRC idle state, sending the SRS configuration-related information to the gNB-CU.

7. The positioning configuration information processing method of claim 6, further comprising:
determining that the UE is in the RRC inactive state based on that the UE is accessing with a Small Data Transmission (SDT).

8. The positioning configuration information processing method of any one of claims 1 to 3 and 5 to 7, wherein the SRS configuration-related information comprises at least one of:
a first type of configuration information for positioning the UE in the RRC inactive state or the RRC idle state, wherein the first type of configuration information comprises at least one of time-frequency resources or period information; or
a second type of configuration information for positioning the UE in the RRC inactive state or the RRC idle state, wherein the second type of configuration information comprises at least one of: BandWidth Part (BWP) information; Reference Signal Receiving Power (RSRP) threshold information for validating a Time Alignment (TA); downlink path loss reference information for validating the TA; absolute RSRP threshold information about a Synchronization Signal Block (SSB) set for a downlink path loss reference for validating the TA; or TA timing information for indicating SRS positioning transmission.

9. The positioning configuration information processing method of claim 8, wherein the BWP information comprises: a Supplementary Uplink BWP (BWP-SUL); and/or a Normal Uplink BWP (BWP-NUL).

10. The positioning configuration information processing method of claim 8, wherein the RSRP threshold information comprises at least one of:
second indication information for indicating to increase a RSRP threshold; or
third indication information for indicating to reduce the RSRP threshold.

11. A positioning configuration information processing method, performed by a gNB-CU, comprising:
receiving SRS configuration-related information sent by a gNB-DU; and
sending the SRS configuration-related information to a UE, wherein the SRS configuration-related information is used for positioning the UE.

12. The positioning configuration information processing method of claim 11, wherein the sending the SRS configuration-related information to a UE comprises:
sending an RRC signaling carrying the SRS configuration-related information to the UE.

13. The positioning configuration information processing method of claim 11, wherein the SRS configuration-related information is used for positioning the UE in an RRC inactive state or an RRC idle state.

14. The positioning configuration information processing method of claim 11, further comprising:
sending a positioning information request message to the gNB-DU, wherein the positioning information request message is used to request the SRS configuration-related information.

15. The positioning configuration information processing method of claim 11 or 14, wherein the receiving the SRS configuration-related information sent by the gNB-DU comprises:
receiving a positioning information response message carrying the SRS configuration-related information sent by the gNB-DU.

16. The positioning configuration information processing method of claim 14, wherein the sending the positioning information request message to the gNB-DU comprises:
sending the positioning information request message carrying first indication information to the gNB-DU, wherein the first indication information is used to indicate to request the SRS configuration-related information from the UE in an RRC inactive state or an RRC idle state.

17. The positioning configuration information processing method of any one of claims 11 to 14 and 16, wherein the SRS configuration-related information comprises at least one of:
a first type of configuration information for positioning the UE in the RRC inactive state or the RRC idle state, wherein the first type of configuration information comprises at least one of time-frequency resources or period information; or
a second type of configuration information for positioning the UE in the RRC inactive state or the RRC idle state, wherein the second type of configuration information comprises at least one of: BWP information; RSRP threshold information for validating a TA; downlink path loss reference information for validating the TA; absolute RSRP threshold information about a SSB set for a downlink path loss reference for validating the TA; or TA timing information for indicating SRS positioning transmission.

18. The positioning configuration information processing method of claim 17, wherein the BWP information comprises: a BWP-SUL; and/or a BWP-NUL.

19. The positioning configuration information processing method of claim 17, wherein the RSRP threshold information comprises at least one of:
second indication information for indicating to increase an RSRP threshold; or
third indication information for indicating to reduce the RSRP threshold.

20. A positioning configuration information processing method, performed by a UE, comprising:
receiving SRS configuration-related information sent by a gNB-CU, wherein the SRS configuration-related information is obtained by the gNB-CU from a gNB-DU; and
determining a position of the UE based on the SRS configuration-related information.

21. The positioning configuration information processing method of claim 20, wherein the receiving the SRS configuration-related information sent by a gNB-CU comprises:
receiving an RRC signaling carrying the SRS configuration-related information sent by the gNB-CU.

22. The positioning configuration information processing method of claim 20 or 21, wherein the SRS configuration-related information comprises at least one of:
a first type of configuration information for positioning the UE in an RRC inactive state or an RRC idle state, wherein the first type of configuration information comprises at least one of time-frequency resources or period information; or
a second type of configuration information for positioning the UE in the RRC inactive state or the RRC idle state, wherein the second type of configuration information comprises at least one of: BWP information; RSRP threshold information for validating a TA; downlink path loss reference information for validating the TA; absolute RSRP threshold information about a SSB set for a downlink path loss reference for validating the TA; or TA timing information for indicating SRS positioning transmission.

23. The positioning configuration information processing method of claim 22, wherein the BWP information comprises: a BWP-SUL; and/or a BWP-NUL.

24. The positioning configuration information processing method of claim 22, wherein the RSRP threshold information comprises at least one of:
second indication information for indicating to increase a RSRP threshold; or
third indication information for indicating to reduce the RSRP threshold.

25. A positioning configuration information processing apparatus, applied to a gNB - DU, comprising:
a first sending module configured to send SRS configuration-related information to a gNB-CU, wherein the SRS configuration-related information is to be sent to a UE by the gNB CU and the SRS configuration-related information is used for positioning the UE.

26. A positioning configuration information processing apparatus, applied to a gNB - CU, comprising:
a second reception module configured to receive SRS configuration-related information sent by a gNB-DU; and
a second sending module configured to send the SRS configuration-related information to a UE, wherein the SRS configuration-related information is used for positioning the UE.

27. A positioning configuration information processing apparatus, applied to a UE, comprising:
a third reception module configured to receive SRS configuration-related information sent by a gNB-CU, wherein the SRS configuration-related information is obtained by the gNB-CU from a gNB-DU; and
a second processing module configured to determine a position of the UE based on the SRS configuration-related information.

28. A communication device, comprising:
a processor; and
a memory storing therein instructions executable by the processor,
wherein the processor is configured to execute the executable instruction, so as to implement the positioning configuration information processing method of any one of claims 1 to 10, or claims 11 to 19, or claims 20 to 24.

29. A computer storage medium storing therein a computer-executable program, wherein the computer-executable program is executed by a processor so as to implement the positioning configuration information processing method of any one of claims 1 to 10, or claims 11 to 19, or claims 20 to 24.
